# EUROPÄISCHE PATENTSCHRIFT

(11) **EP 3 220 127 B1**
(45) Veröffentlichungstag und Bekanntmachung des Hinweises auf die Patenterteilung: **23.09.2020**
(21) Anmeldenummer: 16450006.8
(22) Anmeldetag: 17.03.2016
(51) Int. Cl.: G01N 11/14

(54) **VORRICHTUNG UND VERFAHREN ZUR OPTISCHEN MARKIERUNG EINER MESSTEILFLÄCHE IM RHEOMETER**
DEVICE AND METHOD FOR OPTICALLY MARKING A MEASURING PART SURFACE IN A RHEOMETER
DISPOSITIF ET PROCÉDÉ DE MARQUAGE OPTIQUE D'UNE FACE D'ÉLEMENT DE MESURE DANS UN RHÉOMETRE

(43) Veröffentlichungstag der Anmeldung: 20.09.2017
(73) Patentinhaber: Anton Paar GmbH, 8054 Graz-Straßgang (AT)
(72) Erfinder: Krenn, Michael, 8141 Zettling (AT); Köck, DI Florian, 8010 Graz (AT)

(56) Entgegenhaltungen:
- EP-A1- 2 687 338
- DE-A1- 3 118 875
- US-A1- 2007 193 343
- US-A1- 2011 252 871
- US-A1- 2012 170 246

## Beschreibung

Die Erfindung betrifft ein Rotationsrheometer oder Viskosimeter mit zumindest einem Messmotor 1 zum Antrieb einer Messwelle 4. Die Messprobe wird in den Raum zwischen zwei Messteilen (2, 3) eingebracht und die beiden Messteile werden angenähert. Der Messspalt S zwischen den beiden Messteilen muss mit höchster Genauigkeit eingestellt werden, dazu sind die beiden Messteile relativ zueinander entlang der Achse 12 axial verschiebbar. Rotationsrheometer bzw. -viskosimeter dieser Art sind beispielsweise aus der AT404192B1 bekannt. Darüber hinaus sind aber auch Anordnungen mit zwei Motoren bekannt, entweder mit zwei Messmotoren oder auch Anordnungen mit einem Drehmotor für die Rotation einer Messwelle und einem separaten Messmotor (siehe dazu beispielsweise die AT508706 B1). Bekannte Rheometer im Stand der Technik sind an Stativen montiert, die Verstellung des Abstandes zwischen den Messteilen kann z.B. mittels Steppermotor (7) erfolgen, der die Spindel (8) dreht und über eine Mutter (9) den Tragbalken (10) für den Messmotor (1) entlang der Spindel auf- und ab bewegt. Zusätzliche Messsysteme für die genaue Einstellung und Bestimmung des Messspaltes sind ebenso bekannt wie separate Bewegung beispielsweise des unteren Messteils an einem fixen Stativ. Diese konstruktiven Teile des Rheometers sind zumeist mit einem Tragbalken 10 und einem Bodenelement ausgeführt, der Tragbalken hält einen Motor (1) mit der Messwelle (4) und dem oberen Messteil(2).

Die Messsysteme können in unterschiedlichen Ausgestaltungsformen vorliegen, häufig werden allerdings Platte-Platte und Kegel-Platte-Messsysteme verwendet. In diesen Fällen liegt das untere Messteil als ebene Platte vor, die entweder auf dem Fuß des Rheometers aufliegt (z.B. mit integrierter Heizung) oder an einer separaten Messwelle eines zweiten Motors befestigt ist.

Daneben sind auch unterschiedlichste andere Ausführungsformen zur Untersuchung der viskoelastischen Eigenschaften bekannt, z.B. auch Ringsysteme, bei denen vor allem das obere Messteil die Form eines Kreisrings besitzt oder Doppelspaltsysteme etc.

Die Messteile können mithilfe einer Messteilkupplung (6) ausgetauscht werden, Messteile können über unterschiedliche Kennzeichnungsmechanismen automatisch erkannt und Messroutinen angepasst werden (z.B. verwendete Kalibrationsdaten)

Die zwischen den beiden Messteilen befindliche Probe wird zwischen den beiden Messteilen mit einer Scherbelastung beaufschlagt (Rotation oder rotierende Oszillation der Messteile um die gemeinsame Achse 12.) Das von der Probe dieser Scherbelastung entgegengesetzte Drehmoment wird gemessen und hinsichtlich der viskoelastischen Eigenschaften der Probe ausgewertet.

Dabei spielen sowohl Temperatureinflüsse eine Rolle als auch auftretende Normalkräfte,
Für den die Messwelle antreibenden Messmotor ist die Beziehung zwischen dem Drehmoment an der Messwelle und der Stromaufnahme des Messmotors bekannt bzw. wird durch entsprechende Kalibriermessungen möglichst genau ermittelt. Dadurch kann das von der zu untersuchenden Substanz über das Messsystem auf die Messwelle übertragene Drehmoment bestimmt werden. Die Messgrößen Drehmoment und Drehzahl werden in die rheologischen Messgrößen Scherrate und Schubspannung übersetzt und die Viskosität bestimmt.

Mit derartigen Rheometern können unterschiedlichste Proben untersucht werden. Reale Proben beinhalten eine breite Palette von niedrig viskosen, annähernd idealen Flüssigkeiten bis hin zu viskoelastischen Proben von der Konsistenz z.B. von Asphalt und aushärtenden Gummimischungen bei denen beispielsweise annähernd Festkörper zentriert auf das untere Messteil aufgebracht werden.

Prinzipiell können die Messteile für die Aufbringung von Proben zur gleichförmigen und/oder zentrierten Aufbringung der Messprobe markiert sein.

Bekannt ist, dass man hier beispielsweise farbige, Beschichtungen oder die Oberflächen mit einem matten Schliff versieht oder auch Teile der Platte hochglanzpoliert. Dabei ist allerdings immer das Problem gegeben, dass die bearbeiteten Messteile mit minimal anderen mechanischen Eigenschaften über die Oberfläche des unteren Messteils ausgestattet werden, kleinste Stufen, unterschiedliches Haften der untersuchten Proben auf der Messteilfläche etc. kann zu einer unerwünschten Verfälschung des Messergebnisses führen.

Dünne durchgängige transparente Beschichtungen führen zu aufwändigeren Produktionsverfahren und können auch weniger beständig sein als die üblichen Metalloberflächen.

Darüber hinaus kann eine permanente Markierung nicht unterschiedliche Anforderungen bei der Aufbringung der Probe angepasst werden. Manchmal ist es gewünscht unterschiedliche Probenteile in beispielsweise konzentrischen Ringen auf die Messplatte aufzubringen, erfindungsgemäß wird daher vorgeschlagen, die Markierung veränderbar zu machen.

Bei einem Doppelspaltsystem oder einem kreisringförmigen oberen Messteil kann gewünscht sein, die Probe auf der unteren Messplatte möglichst genau und symmetrisch aufzubringen (fluide Proben werden beispielsweise häufig mit Spritzen aufgetragen.

In vielen Versuchsdurchführungen ist auch die Kombination von unterschiedlichen Markierungen und separate Aufbringung unterschiedlicher Probenbestandteile nötig

Bringt man eine zweite Schicht eines Probenmaterials auf eine bereits aufgebrachte Probenschicht zusätzlich selektiv auf, sind auch die permanenten Markierungen auf dem Messteil zumeist nicht mehr ersichtlich.

Der Erfindung liegt also die Idee zugrunde, das Aufbringen von Proben durch Kennzeichnung von Mittelpunkt und /oder Radien auf den Messteilen eines Rheometers zu erleichtern und verbessern, ohne die Oberfläche der Messteile zu verändern oder den Produktionsprozess der Messkörper zu verkomplizieren.

Erfindungsgemäß wird daher vorgeschlagen, das Rheometer mit einer symmetrischen Beleuchtung rund um die obere Messwelle des Rheometers auszustatten und damit das Messsystem bestehend aus oberem und unterem Messteil zu beleuchten.

Das obere Messteil wird entlang der Messwelle 4 bzw. Rotationsachse 12 von oben (möglichst rotationssymmetrisch) beleuchtet. Damit kann ein Schattenwurf am unteren Messteil (3) erzeugt werden, der als optische Markierung für die Probenaufbringung dient.

Die Beleuchtungseinheit besteht erfindungsgemäß aus zumindest einem Leuchtmittel, das eine symmetrische Beleuchtung von oberem Messteil und Messwelle ermöglicht. Geeignete Leuchtmittel sind beispielsweise bevorzugt bekannte klein dimensionierte Leuchtstoffröhren in ringförmiger Ausführung, Kreissegmente, LEDs, von denen zumindest 2, besser drei symmetrisch rund um die Messwelle angebracht werden. Alternativ kann auch eine Lichtquelle in Kombination mit Lichtleitern verwendet werden, die symmetrische Auslässe um die Messachse besitzen.

In Fällen komplexer Messteilgeometrien kann auch die Messwelle (4) selbst ohne Messteil zum Schattenwurf verwendet werden und/oder die Koppeleinheit 6, die den Wechsel der Messteile ermöglicht, für den Schattenwurf Verwendung finden.

Für komplexe Aufgaben können auch separate Schattenschablonen erzeugt werden, die an der Messteilkupplung 6 angebracht werden und in Verbindung mit der Beleuchtungseinheit spezielle optische Markierungen wie Segmente, Spiralen etc. auf der unteren Messplatte ergeben können und damit die gewünschte Probenaufbringung unterstützen

Um die optische Markierung an das jeweilige Problem der Aufbringung anpassbar zu machen, kann der Abstand zwischen Beleuchtungseinheit und Schattenelement (Messteil und/oder Messwelle und/oder Messteilkupplung und/oder Schattenschablone) veränderbar sein. Dazu kann der untere Messteil und /oder der obere Messteil und/oder die Lage der Beleuchtungseinheit verändert werden. Die Schattenschablone kann mit einem Tragelement ausgestattet werden, das in die Messteilkupplung 6 eingepasst werden kann.

Die Beleuchtungseinheit kann an den konstruktiven Teilen des Rheometers sowohl abnehmbar als auch höhenverstellbar, beispielsweise durch Schraubelemente oder Flügelmuttern angeordnet sein.

Die Steuerung oder Regelung der Lichtabgabe kann händisch über separate Bedientasten der Beleuchtungseinheit durchgeführt werden.

Die Steuerung und/oder Regelung der Lichtabgabe der Leuchtmittel kann aber auch über die Steuer- und Auswerteeinheit des Rheometers ausgeführt werden.

Im Programmablauf des Rheometers kann dabei vorgesehen werden, dass die Leuchtmittel beim Auseinanderfahren der Messteile zwischen den einzelnen Versuchsdurchführungen automatisch erfolgt. Gleichzeitig kann vorgesehen sein, dass die Beleuchtung beim Erreichen der Messposition abschaltet. In dieser einfachsten Ausführung kann die Abschaltung dazu benutzt werden, die Messbereitschaft des Systems anzuzeigen.

Wenn das Rheometer über Mittel zur Temperierung der Probe verfügt, kann diese Anordnung auch dazu benutzt werden, das Erreichen der Zieltemperatur durch Abgabe von Licht anzuzeigen. Dies ist insbesondere dann sinnvoll, wenn die Messzyklen Zeitintensiv sind und bei Erreichen bestimmter Schwellwerte Benutzereingaben nötig sind.

Weiters kann es von Vorteil sein, die optische Markierung gegebenenfalls an das jeweilige Messproblem anzupassen. Erfindungsgemäß wird dazu vorgeschlagen, die jeweilige Form der optischen Markeirungen anzupassen. (Beispielsweise für das Auftragen von gemischten Proben in konzentrischen Ringen).

Dies kann beispielsweise bei der Untersuchung von sich ändernden Proben, z.B. durch Zugabe von Zusätzen aushärtenden Proben zur Unterdrückung von Randeffekten, gewünscht sein.

Um den Schattenwurf der Beleuchtungseinheit zu verbessern, kann vorgesehen sein, die Leuchtmittel mit zusätzlichen Vorrichtungen wie beispielsweise Linsen zu versehen. Dazu kann die dem Messsystem zugewandte Seite des Beleuchtungssystems mit Linsen ausgestattet werden, die das Licht des bzw. der Leuchtmittel bündeln und die Lichtrichtung auf die Platte hin fokussieren. Dabei können sowohl für LEDs als auch für andere Leuchtmittel (z.B. einem kontinuierlichen Ringlicht) als Linsenring vor das Leuchtmittel gebaut werden.

Werden LEDs oder kleine Lampen verwendet, kann ein derartiger verdrehbarer Ring mit Linsen montiert werden, die die Richtung des Lichtes beim Weiterdrehen des Filterrades ändern und so den Schattenwurf an die Meteilgeometrie und/oder die Probenaufbringung anpassen.

So kann mit unterschiedlichen Linsenkombinationen eine Kennzeichnung des Mittelpunkts und/oder konzentrische Kreise auf der Oberfläche des unteren Messteils erzeugt werden.

Erfindungsgemäß kann diese Anpassung auch durch LEDS mit unterschiedlichen fokussierten LEDS erreicht werden, von denen jeweils zumindest zwei symmetrisch um die Messachse angeordnet werden und gemeinsam für die Beleuchtung des Messsystems verwendet werden. Durch Anordnung unterschiedlicher LEDS kann so ein unterschiedlicher Schattenwurf am Messteil erreicht werden.

Alternativ kann auch nur eine Art fokussierte LEDs Verwendung finden, die durch mechanische Mittel ihre Einbaulage bzw. den Winkel relativ zur Messachse ändern können. Dies kann durch beispielsweise einen Haltemechanismus wie einen Montagering erfolgen, der die kontaktierten aber beweglichen LEDs gegen einen geneigten Halter verdreht und so die Abstrahlrichtung ändert.

Werden gegenüber einem Teil des sichtbaren Spektrums empfindliche Proben untersucht, kann es von Vorteil sein, die Farbe des Lichtes, das für die Probenaufbringung verwendet wird, durch eine spezielle Zusatzeinrichtung wählbar zu machen. Dies kann durch kombinierte Verwendung von Leuchtmitteln unterschiedlicher Farbe erreicht werden, die selektiv ansteuerbar sind. Damit können durch Kombination von zumindest zwei oder mehr Farbtönen sowohl Weißlicht als auch selektiv ein Farbe für die optische Markierung Verwendung finden, z.B. für UV-aushärtende Proben durch Beleuchtung mit Rotlicht eine Beeinflussung des Messergebnisses bereits von der Messung ausgeschlossen werden

In der US 8763447 B2 wird beispielsweise ein Rheometer zur Untersuchung von UVaushärtenden Proben vorgeschlagen, die über ein transparentes Messteil mit UV-Licht bestrahlt werden. Die zwischen den Messteilen befindliche Probe wird also während der Messung selektiv beleuchtet, um die Eigenschaften der Probe zu verändern. Für das Aufbringen der Probe kann es hier gewünscht werden, sämtliche Komponenten des sichtbaren Spektrums in Richtung Blau / UV bei der Probenaufbringung auszublenden. Die untere Messplatte wird daher bevorzugt mit einer optischen Markierung im roten Teil des sichtbaren Spektrums versehen.

Die Leuchtmittel werden also so gewählt und segmentiert angeordnet, dass jeweils zumindest zwei idente Leuchtmittel gemeinsam angesprochen werden, um das Messsystem zu beleuchten. Ordnet man LEDs unterschiedlicher Farbe z.B. durch die Auswahl unterschiedlicher LEDs, die im Roten, Grünen und Blauen Bereich des sichtbaren Spektrums schmalbandig emittieren, und auch kombiniert betreiben werden können, sind durch die Überlagerung der einzelnen LEDs unterschiedliche Farben bis hin zum Weißlicht realisierbar.

Insbesondere können diese unterschiedlichen Farben der Beleuchtung auch dazu benutzt werden, unterschiedliche Zustände des Rheometer optisch aus weitem Abstand erkennbar an den Benutzer zu kommunizieren. (Beispiele dafür sind Blinklichter, unterschiedliche Farbgebung, dynamisches Ansprechen unterschiedlicher Leuchtmittel des Beleuchtungssystems)

Im Folgenden werden exemplarische Ausführungen der Erfindung anhand der Figuren dargestellt.
Figur 1 zeigt ein erfindungsgemäßes Rheometer mit einem Ringlicht als Leuchtmittel
Figur 2 zeigt eine alternative Ausführungsform des erfindungsgemäßen Rheometers mit zumindest zwei LEDs und einer Schattenschablone
Figur 3 zeigt eine Anordnung von fokussierten LEDs mit unterschiedlicher Einbaurichtung.
Figur 4 zeigt die Kombination von Leuchtmitteln mit einer fokussierenden Anordnung
Figur 5 zeigt die Kombination von einer Art Leuchtmittel mit einer drehbaren Filteranordnung

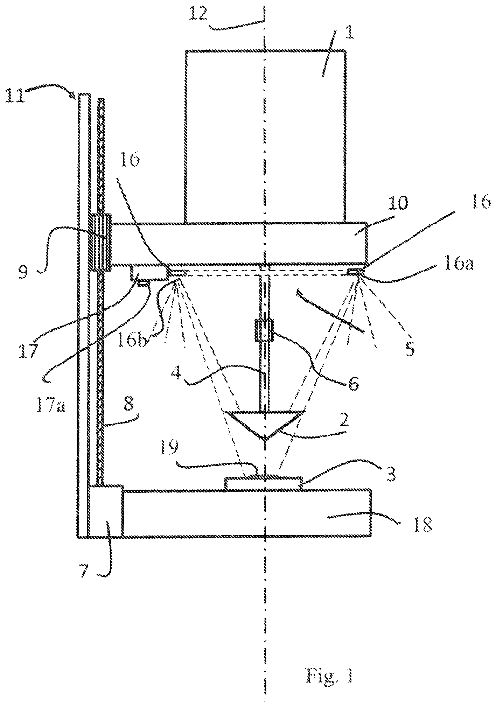

Figur 1 zeigt eine Ausführungsform des erfindungsgemäßen Rheometers: Zentraler Bestandteil des Rheometers ist der Messmotor (1), der die Messwelle (4) rotierend oder rotierend oszillierend um die Rotationsachse 12 antreiben kann. Messwelle 4 trägt den oberen Messteil (2). Dieser ist ggf. an einer Messteilkupplung (6) austauschbar an der Messwelle befestigt. Messmotor (1) wird von einem Tragbalken (10) des Stativs (11) getragen und ist mittels Steppermotor (7), der die Spindel (8) dreht und dabei eine Mutter (9), die den Tragbalken (10) für den Messmotor (1) hält, entlang der Spindel (8) verschiebt, höhenverstellbar. Die zu untersuchende Probe wird beispielsweise mit einer Spritze auf das untere Messteil (3) aufgebracht. Anschließend werden die beiden Messteile (2,3) einander angenähert und der gewünschte Messspalt zwischen den beiden Messteilen wird präzise eingestellt und/oder vermessen. Die Steuer- und Auswerteeinheit des Rheometers besteht hier aus einer separaten Einheit (z.B: einem Computer) mit einer Schnittstelle zu dem Rheometer und ist nicht dargestellt. Auch eine kabellose Verbindung mit einer Steuereinheit mit entsprechenden Programmen (z.B. einem Tablet, PDA, ..) ist möglich. Rheometerspezifische Sensoren und Elektronikkomponenten sind im Gehäuse des Messmotors (1) untergebracht. Die axiale Verschiebung kann ggf. auch händisch erfolgen. Die Beleuchtungseinheit (5) ist hier fix mit den konstruktiven Teilen des Rheometers verbunden. Untere Messplatte liegt direkt in einem Flansch auf dem Stativfuß (18) auf. Gegebenenfalls können hier auch Mittel zur Probentemperierung integriert sein.

Der Tragbalken 10 hält hier eine Halterung (17) für ein Leuchtmittel in Form eines Ringlichtes (16), das fix mit dem Rheometer verbunden ist. Das Ringlicht umgibt die Messwelle, wobei der Mittelpunkt der Leuchtstoffröhre auf der Rotationsachse 12 liegt. Die Leuchtmittel sind dadurch einfach austauschbar. Halterung 17 besitzt im einfachsten Fall einen Schalter 17 a für die Bedienung der Beleuchtungseinheit (hier nicht dargestellt). Alternativ kann auch die Bedienung über die Steuer- und Auswerteeinheit des Rheometers erfolgen. Halterung 6 und Ringlicht 16 kann hier auch direkt am Motorgehäuse angebracht werden, wenn die Konstruktion des Stativs dies durch entsprechende Ausnehmungen erlaubt. Das obere Messteil 2), hier der Kegel eines Kegel-Platte-Systems fungiert als Schattenelement. Exemplarisch wird die Entstehung des Schattenwurfs durch Ausblenden eines Teils der Lichtstrahlen aus zwei Lichtemittierenden Punkten des Ringlichtes 16 a und 16 b gezeigt, die Lichtstrahlen werden durch unterbrochene Linien schematisch dargestellt, dabei wird ein Teil des von Ringlicht emittierten Lichtstrahlen durch das Schattenelement (oberes Messteil 2) am Auftreffen am unteren Messteil behindert, während die außerhalb liegenden Linien den Stativfuß und das untere Messteil erreichen können. So entsteht an der Oberfläche des unteren Messteils eine unbeleuchtete Region (19), die als optische Markierung für die Probenaufbringung dient. Durch Wahl des Abstandes zwischen den beiden Messteilen kann der Durchmesser der optischen Markierung auf einfache Weise verändert werden.

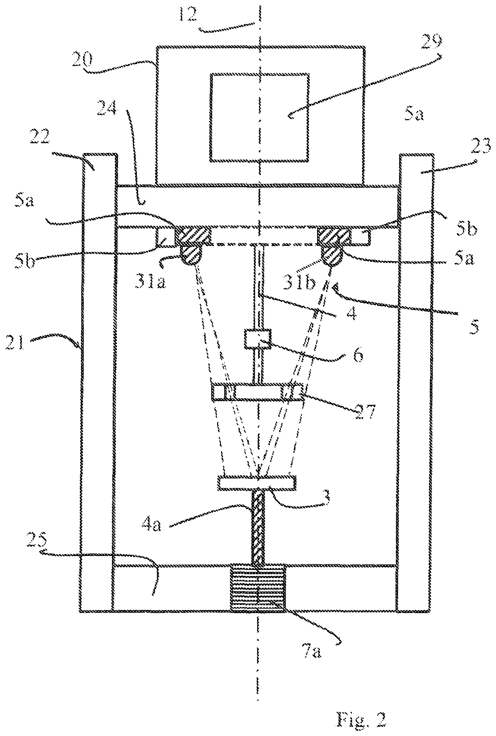

Fig. 2 zeigt eine alternative Ausführungsform. Messmotor und Steuer- und Auswerteeinheit des Rheometers sind in Gehäuse (20) untergebracht. Die Bedienung kann hier direkt über Bedien- und Anzeigeelemente (z.B. kann ein Touchscreen (29) zur Eingabe der Messvorgaben und Steuerung der Versuchsdurchführung sowie Ausgabe der Messergebnisse) verwendet werden. Das Stativ (21) ist hier eine starre Konstruktion aus zwei vertikalen Balken (22) und (23) sowie Querbalken (24) und Stativfuß (25). Das untere Messteil wird hier höhenverstellbar mit einem Motor 7a und einer Welle 4a ausgeführt. Das obere Messteil wurde zum Aufbringen der Probe entfernt und stattdessen eine Schattenschablone (27) hier in die Messkörperkupplung (6) eingesetzt. In einfacher Weise ist dies möglich, indem dieses Element mit einem Wellenstück wie die üblichen Messteile zur Befestigung an der Kupplung ausgestattet ist. Das Schattenelement 27 besteht beispielsweise aus konzentrischen Ringen, die auf dem unteren Messteil konzentrische Kreise bzw. Kreisringe erzeugen, die abwechselnd beleuchtet und abgeschattet sind.

Dem Fachmann ist klar, dass unter dem Ausdruck symmetrisch hier nicht bloß eine Rotationssymmetrische Anordnung verstanden werden kann, die Leuchtmittel können beispielsweise auch auf einem elliptischen Halteelement 5a angebracht werden, oder an unterschiedlichen Positionen konzentrisch.

Beleuchtungseinheit 5 ist hier mit zumindest zwei symmetrisch angeordneten LEDs (31a, 31b) ausgestattet. Diese LEDs werden von einem zumindest einem Halteelement 5a, beispielsweise einem Kreisring oder einer Platte) gehalten und über Befestigungsmittel 5b (Schrauben, Steckverbindungen, Klammern oder dergleichen) am Querbalken 24 lösbar befestigt. Auch hier kann ein eigenes Bedienfeld an der Beleuchtungseinheit 5 angebracht sein oder die Bedienung über eine interne Schnittstelle mit der Steuer- und Auswerteeinheit des Rheometers händisch oder automatisiert erfolgen.

Auch andere Ausführungsformen von Rheometern sind im Stand der Technik bekannt. Beispielsweise kann Motor 7a über die Messwelle 4a den unteren Messteil rotierend oder rotierend oszillierend antreiben und der Motor in Gehäuse 1 das auf die Probe und damit auf den oberen Messteil wirkende Drehmoment über einen Messmotor im Gehäuse (20) kompensieren. Auch können beide Motoren als Messmotoren für Drehmoment und auftretende Normalkräfte ausgeführt werden. Die gezeigten Stative können auch unterschiedliche Gehäuse besitzen, die das Messsystem zur besseren Temperierbarkeit umgeben und/oder als Temperierkammern ausgeführt werden. Dabei können die erfindungsgemäßen Beleuchtungseinheiten auch an Teilen dieser Kammern befestigt sein

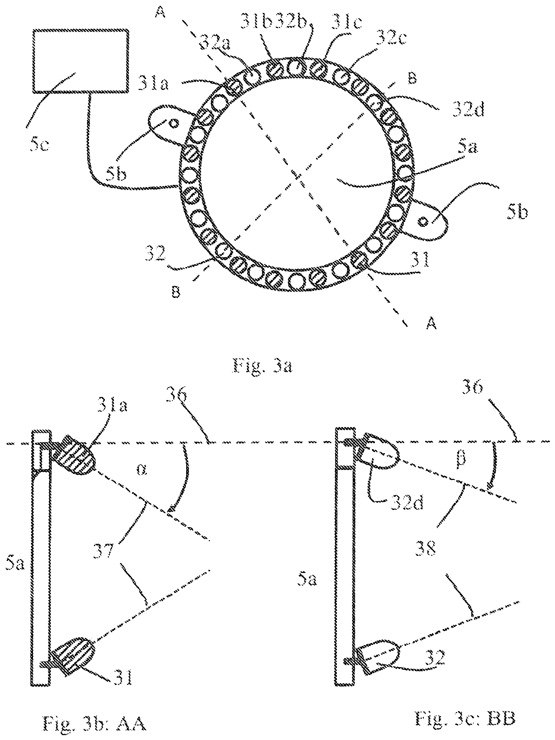

Fig. 3 zeigt eine Ausführungsform der Beleuchtungseinheit 5 mit zwei verschiedenen LEDs 31 und 32. Um eine alternative symmetrische Beleuchtung zu erlangen, sind von jeder Art der LED zumindest 2, bevorzugt aber 3 oder Mehr LEDs montiert.

Die LEDs sind abwechselnd auf einem Kreisring auf einem Träger 5a angebracht, dieser ist hier als scheibenförmige Platine ausgeführt und beinhaltet auf der Rückseite die Leiterbahnen für die Stromversorgung der einzelnen LEDs. Die Platine enthält einen entsprechenden Mikroprozessor zur Ansteuerung der einzelnen LEDs oder dieser ist in einer separaten Bedieneinheit 5c untergebracht, die mit den Leiterbahnen auf der Platine verbunden ist. Halteelemente 5b dienen zur Befestigung der Beleuchtungseinheit 5 am Rheometer.

Fig. 3 a zeigt die alternierende Montage der beiden hier verwendeten LEDs in einem Kreis auf dem Träger 5a, diese sind bevorzugt bereits fokussierte LEDs, die das Licht gerichtet abstrahlen. Die Vorzugrichtung ist hier für beide LEDs die gleiche, das Licht wird nach vorne hin fokussiert (in Richtung einer Achse der LED). Dies wird in Fig. 3b und c durch die Linien 37 und 38 dargestellt. Beispielsweise können 31 und 32 jeweils unterschiedliche Bereiche des sichtbaren Spektralbereichs emittieren. LEDs 31 der ersten Art werden alternierend zu LEDs 32 der zweiten Art auf der Platine entlang eines Kreisringes angebracht. Die Kontaktierung und Befestigung ist hier nicht detailliert dargestellt, sondern erfolgt hier über einen Sockel und durchkontaktieren auf die Rückseite der Platine. Die Kontaktierung ermöglicht die separate Schaltung der beiden LED-Arten, aber auch ein selektives Schalten der einzelnen LEDs ist möglich. z.B. um umlaufende Beleuchtung durch abwechselndes Leuchten von LEDs 31a, 31b, 31c.. nacheinander zu realisieren oder eine Abfolge von LEDs 31 a, b, c,... abwechselnd mit LEDs 32 a, b, c,.......Voraussetzung dafür ist die einzelne Ansprechbarkeit der LEDs und ein entsprechendes Steuermodul 5c. Dies kann speziell dann von Nutzen sein, wenn die Steuerung über das Rheometer erfolgt und die Leuchtmittel auch für die Statusanzeige Verwendung finden. Die Fig. 3b zeigt zwei LEDs 31 und 31 a auf der Patine 5a entlang Schnittlinie AA, während die Fig. 3b die LEDs 32 und 32d entlang der Schnittlinie BB zeigt. Hier ist klar erkenntlich, dass die beiden Arten der LEDs 31 und 32 unter unterschiedlichen Winkeln gegenüber der Senkrechten 36 auf die Platine 5a montiert

sind. Und mit dieser unterschiedliche Winkel α und β einschließen. Damit sind mit den Arten 31 und 32 unterschiedliche Ringsegmente optisch markierbar.

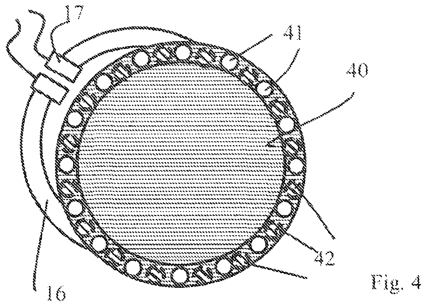

Fig. 4 zeigt schematisch eine Ringleuchte 16 in einer Halterung 17, die in Verbindung mit einem vorgesetzten Linsenträger (40) mit zwei Arten von fokussierenden Linsen 41 und 42 zwei verschiedene optische Markierungen erzeugt. Die Linsen mit unterschiedlicher Vorzugrichtung ändern die Fokussierung des durchgelassenen Lichtes. Die restlichen Bereiche des Linsenhalters lassen kein Licht durch, damit lassen sich wieder unterschiedliche optische Markierungen am untern Messteil erzeugen. Zur besseren Sichtbarkeit sind hier die eigentlich auf der gleichen Drehachse 12 der Fig. 1 und 2 am Rheometer liegenden Mittelpunkte von Ringlicht und Filteranordnung versetzt gegeneinander dargestellt.

Alternativ können alle unterschiedlichen Abstrahlpositionen mit Lichtleitern und gegebenenfalls an deren Ende sitzenden Linsenarten 41 und/oder 42 mit einer einzigen Lichtquelle die symmetrische Beleuchtung erzeugen. Dabei wird die vom beliebig angeordneten Leuchtmittel abgegebene Strahlung in an sich bekannter Weise in die einzelnen Lichtleiter eingekoppelt und zu den Abstrahlpositionen geführt

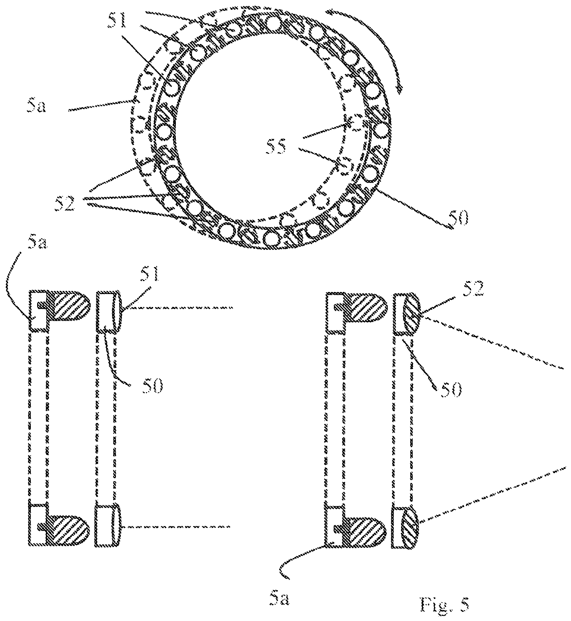

Fig. 5 zeigt schematisch eine weitere alternative ausführungsform: Eine Art von fix montierten LEDs 55 oder auch anderen Leuchtmitteln, wird beabstandet voneinander auf einem Montageelement (beispielsweise einer Platine) 5a montiert, zwischen den einzelnen Positionen befindet sich Freiraum. Die Leuchtmittel werden von einem Filterhalter 50 überdeckt. Zur besseren Sichtbarkeit sind hier die eigentlich auf der gleichen Drehachse 12 der Fig. 1 und 2 am Rheometer liegenden Mittelpunkte von LED-Montage und Filteranordnung versetzt gegeneinander dargestellt.

Die Filteranordnung hier besteht aus zumindest zwei unterschiedlichen Filtern, die nur einen Teil des vom Leuchtmittel emittierten Lichtes durchlassen. Durch verdrehen des Filterträgers 50 können die Filter 51 und 52 abwechselnd vor die LED gebracht werden und die auf das Messsystem strahlende Farbe kann gewählt werden. Alternativ dazu kann auch eine Anordnung von unterschiedlichen fokussierenden Linsen wie in Fig.4 dargestellt, verwendet werden und auf dem Träger angebracht und rotierend positioniert werden. In Kombination kann dazu auch eine Fokussierung des durchgelassenen Lichtes wie in Fig. 4 beschrieben erfolgen. Durch drehbare Anordnung des Filterträgers 50 kann damit die Fokussierung gewählt werden. Da für eine symmetrische Beleuchtung zumindest 2punktfömige Leuchtmittelberiets ausreichend sind, kann hier eine Kombination von farbgebenden und/oder fokussierenden Elementen angeordnet werden. Die Wahl des jeweils verwendeten Vorsatzes kann in einfacher Weise händisch durch verdrehen erfolgen (Markierungen können dann am Gehäuse die gewählte Option verdeutlichen oder auch die automatisierte Auswahl durch einen Steuereinheit in Verbindung mit einem kleinen Motor ist möglich.

## Patentansprüche

1. Rheometer, insbesondere ein Drehrheometer, mit einem unteren Messteil (3) und einem oberen Messteil (2) zwischen denen ein Messspalt zur Aufnahme der viskoelastischen Probe ausgebildet ist und die relativ zueinander bewegbar sind,
wobei eine Beleuchtungseinheit (5) mit zumindest einem Leuchtmittel symmetrisch um die obere Messwelle an den konstruktiven Teilen des Rheometers angeordnet ist,
**dadurch gekennzeichnet, dass**
sichtbares Licht radial und/oder axial entlang der oberen Messwelle in Richtung auf ein Schattenelement hin abgegeben wird und mit diesem eine optische Markierung auf der Oberfläche des unteren Messteils (3) erzeugt wird.

2. Rheometer nach Anspruch 1, **dadurch gekennzeichnet, dass** dieses Schattenelement für die optische Markierung am unteren Messteil (3) das obere Messteil (2) und/oder der Messwelle (4) und/oder die Messteilkupplung (6) und/oder eine Schattenschablone (27) ist und zumindest eine Teilfläche (19), insbesondere einen Punkt und/oder einen Kreisringbereich zum Aufbringen der Mediumsprobe kennzeichnet am unteren Messteil durch Schattenbildung kennzeichnet.

3. Rheometer nach Anspruch 1 oder 2. **dadurch gekennzeichnet, dass** das Leuchtmittel aus zumindest einer Lichtquelle für sichtbares Licht, insbesondere Leuchtstofflampen, Ringlichter, LEDs (16, 32) oder einer Kombination aus Lampe und Lichtleitern besteht und die Messwelle symmetrisch umgibt.

4. Rheometer nach Anspruch 1 oder 2. **dadurch gekennzeichnet, dass** das Leuchtmittel aus einer symmetrischen Anordnung von zumindest zwei alternierend angebrachten Lichtquellen (31, 32) unterschiedlicher Farbe besteht.

5. Beleuchtungseinheit nach einem der vorstehenden Ansprüche, **dadurch gekennzeichnet, dass** die optische Markierung am unteren Messteil (3) durch Änderung des Abstandes zwischen Beleuchtungseinheit (5) und oberem (2) und/oder unterem Messteil (3) veränderbar ist.

6. Beleuchtungseinheit nach einem der Ansprüche 1 bis 5, **dadurch gekennzeichnet, dass** das vom Leuchtmittel abgegebene Licht durch zumindest eine Fokussiereinheit (41,42) zusätzlich radial und/oder axial ausgerichtet und/oder gebündelt wird und die optische Markierung damit veränderbar ist.

7. Rheometer nach einem der Ansprüche 1 bis 6, **dadurch gekennzeichnet, dass** Leuchtmittel zumindest zweier unterschiedlicher Farben um die Messachse angeordnet sind, und diese separat oder gemeinsam zur farblich unterschiedlichen Beleuchtung der Messteile herangezogen werden

8. Rheometer nach einem der Ansprüche 1 bis 6, **dadurch gekennzeichnet, dass** unterschiedliche Farben zur optischen Markierung aus dem zumindest einem Leuchtmittel erzeugt werden.

9. Rheometer nach einem der Ansprüche 1 bis 8, **dadurch gekennzeichnet, dass** die Beleuchtungseinheit (5) lösbar mit den konstruktiven Teilen des Rheometers verbunden ist

10. Rheometer nach einem der Ansprüche 1 bis 9 **dadurch gekennzeichnet, dass** die Beleuchtungseinheit unabhängig vom Rheometer bedienbar ist.

11. Rheometer nach einem der Ansprüche 1 bis 9 **dadurch gekennzeichnet, dass** die Beleuchtungseinheit mit der Steuer- und/oder Auswerteeinheit des Rheometers über eine Schnittstelle verbunden und über die diese die Beleuchtungseinheit bedienbar ist und/oder automatisiert ausgeführt wird.

12. Rheometer, **dadurch gekennzeichnet, dass** die Beleuchtungseinheit über die Steuer- und/oder Auswerteeinheit des Rheometers zusätzlich zur Ausgabe von Statusanzeigen des Rheometers verwendet wird.

13. Verfahren zur Einbringung einer Messprobe in ein Rheometer gemäß Anspruch 1, **dadurch gekennzeichnet, dass** die optische Markierung (19) am unteren Messteil (3) für das Platzieren der Mediumsprobe insbesondere kleiner Probenmengen verwendet wird.

14. Verfahren zum Einbringen einer Messprobe in ein Rheometer gemäß Anspruch 13, **dadurch gekennzeichnet, dass** die optische Markierung (19) zum definierten Aufbringen verschiedener Probenkomponenten verwendet wird.

## Claims

1. Rheometer, specifically a rotary rheometer, with a lower measuring part (3) and an upper measuring part (2) between which a measurement gap is formed to hold the viscoelastic sample and which can be rotated toward each other,
whereby an illumination unit (5) with at least one light source is attached symmetrically around the upper measuring shaft on the constructive parts of the rheometer,
**characterized by** the fact that
visible light is emitted radially and/or axially along the upper measuring shaft in the direction of a shade element and thus creates an optical marking on the surface of the lower measurement part (3).

2. Rheometer according to claim 1, **characterized by** the fact that this shade element for the optical marking is on the lower measuring part (3), the upper measuring part (2) and/or the measuring shaft (4) and/or the measuring part coupling (6) and/or a shading template (27) and at least a partial surface (19), in particular a point and/or a circular area is marked for the attachment of a medium sample on the lower measuring part by shading.

3. Rheometer according to claim 1 or 2, **characterized by** the fact that the light source is made up of at least one light source for visible light, in particular fluorescent bulbs, ring lights, LEDs (16, 32) or a combination of bulbs and fiber optics and symmetrically surrounds the measuring shaft.

4. Rheometer according to claim 1 or 2, **characterized by** the fact that the light source consists of a symmetrical arrangement of at least two alternating attached light sources (31, 32) of different colors.

5. Illumination unit according to one of the claims above, **characterized by** the fact that the optical marking on the lower measuring part (3) can be changed by altering the distance between the illumination unit (5) and the upper (2) and/or lower measuring part (3).

6. Illumination unit according to one of the claims 1 through 5, **characterized by** the fact that the light emitted by the light source is aligned through at least one focusing unit (41, 42) in a radial and/or axial direction and/or bundled, thus enabling the optical marking to be changed.

7. Rheometer according to one of the claims 1 through 6, **characterized by** the fact that light sources of at least two different colors are arranged around the measuring axis, and these can be used separately or together for various color illumination of the measuring parts

8. Rheometer according to one of the claims 1 through 6, **characterized by** the fact that different colors can be created for optical marking from at least one light source.

9. Rheometer according to one of the claims 1 through 8, **characterized by** the fact that the illumination unit (5) is a removable attachment to the constructive parts of the rheometer

10. Rheometer according to one of the claims 1 through 9, **characterized by** the fact that the illumination unit can be operated independently of the rheometer.

11. Rheometer according to one of the claims 1 through 9, **characterized by** the fact that the illumination unit is attached to the control and/or analysis unit of the rheometer via an interface and using this, the illumination unit can be operated and/or automated.

12. Rheometer, **characterized by** the fact that that the illumination unit is also used via the control and/or analysis unit of the rheometer to show the status displays of the rheometer.

13. Procedure for inserting a measurement sample into a rheometer pursuant to claim 1, **characterized by** the fact that the optical marking (19) on the lower measuring part (3) is used for the placement of the medium sample, in particular smaller sample quantities.

14. Procedure for inserting a measurement sample into a rheometer pursuant to claim 13, **characterized by** the fact that the optical marking (19) is used for the defined placement of various sample components.

## Revendications

1. a. Rhéomètre, en particulier rhéomètre rotatif, avec une partie de mesure inférieure (3) et une partie de mesure supérieure (2) entre lesquelles est formée une fente de mesure pour recevoir l'échantillon viscoélastique et qui sont mobiles l'une par rapport à l'autre,
en sachant qu'une unité d'éclairage (5) avec au moins une source de lumière est disposée symétriquement autour de l'axe de mesure supérieur sur les parties structurelles du rhéomètre,
**caractérisé en ce que**
la lumière visible est émise radialement et/ou axialement le long de l'axe de mesure supérieur en direction d'un élément d'ombre, ce qui permet de créer une marque optique sur la surface de la partie de mesure inférieure (3).

2. Rhéomètre selon la revendication 1, **caractérisé en ce que** cet élément d'ombre pour le marquage optique sur la partie de mesure inférieure (3) est la partie de mesure supérieure (2) et/ou l'arbre de mesure (4) et/ou l'accouplement de la partie de mesure (6) et/ou un gabarit d'ombre (27) et au moins une surface partielle (19), en particulier une zone ponctuelle et/ou une zone circulaire pour l'application de l'échantillon de fluide caractérisé sur la partie de mesure inférieure par la formation d'une ombre.

3. Rhéomètre selon la revendication 1 ou 2, **caractérisé en ce que** la source de lumière est constituée d'au moins une source de lumière visible, en particulier des lampes fluorescentes, des anneaux lumineux, des LED (16, 32) ou une combinaison de lampe et de guides de lumière et entoure symétriquement l'arbre de mesure.

4. Rhéomètre selon la revendication 1 ou 2, **caractérisé en ce que** la source de lumière consiste en une disposition symétrique d'au moins deux sources lumineuses (31, 32) de couleurs différentes montées en alternance.

5. Unité d'éclairage selon l'une des revendications ci-dessus, **caractérisée en ce que** le marquage optique sur la partie de mesure inférieure (3) peut être modifié en changeant la distance entre l'unité d'éclairage (5) et la partie de mesure supérieure (2) et/ou inférieure (3).

6. Unité d'éclairage selon l'une des revendications 1 à 5, **caractérisée en ce que** la lumière émise par la source de lumière est en outre orientée radialement et/ou axialement et/ou mise en faisceau par au moins une unité de focalisation (41, 42) et le marquage optique est variable avec celle-ci.

7. Rhéomètre selon l'une des revendications 1 à 6, **caractérisé en ce que** des sources de lumière d'au moins deux couleurs différentes sont disposées autour de l'axe de mesure, et ces sources de lumière sont utilisées séparément ou ensemble pour éclairer les parties de mesure en différentes couleurs

8. Rhéomètre selon l'une des revendications 1 à 6, **caractérisé en ce que** différentes couleurs pour le marquage optique sont produites à partir d'au moins une source de lumière.

9. Rhéomètre selon l'une des revendications 1 à 8, **caractérisé en ce que** l'unité d'éclairage (5) est reliée de façon détachable aux parties structurelles du rhéomètre

10. Rhéomètre selon l'une des revendications 1 à 9, **caractérisé en ce que** l'unité d'éclairage peut être commandée indépendamment du rhéomètre.

11. Rhéomètre selon l'une des revendications 1 à 9, **caractérisé en ce que** l'unité d'éclairage est reliée à l'unité de commande et/ou d'évaluation du rhéomètre par l'intermédiaire d'une interface et par laquelle l'unité d'éclairage peut être commandée et/ou est exécutée automatiquement.

12. Rhéomètre, **caractérisé en ce que** l'unité d'éclairage est utilisée via l'unité de commande et/ou d'évaluation du rhéomètre en plus de la sortie des affichages d'état du rhéomètre.

13. Procédé pour introduire un échantillon de mesure dans un rhéomètre selon la revendication 1, **caractérisé en ce que** le marquage optique (19) sur la partie inférieure de mesure (3) est utilisé pour placer l'échantillon de fluide, en particulier les petites quantités d'échantillon.

14. Procédé pour introduire un échantillon de mesure dans un rhéomètre selon la revendication 13, **caractérisé en ce que** le marquage optique (19) est utilisé pour placer différents composants d'échantillons.
